(19) **Europäisches Patentamt / European Patent Office / Office européen des brevets**

(11) **EP 1 728 011 B1**

(12) **EUROPEAN PATENT SPECIFICATION**

(45) Date of publication and mention of the grant of the patent:
**03.03.2010 Bulletin 2010/09**

(51) Int Cl.:
*F16H 61/00* *(2006.01)*

(21) Application number: **05722044.4**

(22) Date of filing: **14.03.2005**

(86) International application number:
**PCT/NL2005/000189**

(87) International publication number:
**WO 2005/088171 (22.09.2005 Gazette 2005/38)**

(54) **CONTROL METHOD FOR A CONTINUOUSLY VARIABLE TRANSMISSION**

STEUERVERFAHREN FÜR EIN STUFENLOSES GETRIEBE

PROCEDE DE COMMANDE POUR UN SYSTEME DE TRANSMISSION A VARIATION CONTINUE

(84) Designated Contracting States:
**AT BE BG CH CY CZ DE DK EE ES FI FR GB GR HU IE IS IT LI LT LU MC NL PL PT RO SE SI SK TR**

(30) Priority: **16.03.2004 NL 1025737**

(43) Date of publication of application:
**06.12.2006 Bulletin 2006/49**

(73) Proprietor: **ROBERT BOSCH GMBH**
**70442 Stuttgart (DE)**

(72) Inventor: **Bonsen, Bram,**
**Technische Universiteit Eindhoven**
**NL-5600 MB Eindhoven (NL)**

(74) Representative: **Plevier, Gabriel Anton Johan Maria**
**Bosch Transmission Technology B.V.**
**PO Box 500**
**5000 AM Tilburg (NL)**

(56) References cited:
**EP-A- 1 314 913    EP-A- 1 333 198**
**WO-A-00/28241    WO-A-01/20198**

**Description**

The present invention relates to a control method for controlling a primary clamping force and a secondary clamping force in a continuously variable transmission of the drive-belt-and-pulley type, in particular for motor vehicles, when a mechanical power is being transmitted between a primary pulley and a secondary pulley of the transmission by means of an endless transmission element arranged between them, referred to for short as the drive belt, which control method is described in the preamble of claim 1. The invention also relates to a continuously variable transmission which is designed to be operated in accordance with the abovementioned control method.

A control method and transmission of this type are generally known, for example from European patent publication number EP-A-0 705 399 and more recently from EP-A-1 314 913, which constitutes the closest prior art. In the known transmission, the mechanical power, which is generated, for example, by an engine, is transmitted with the aid of friction, the drive belt being clamped by the primary clamping force between two sheaves, or pulley sheaves, which are positioned opposite one another and are substantially in the form of truncated cones with an obtuse apex angle, of the primary pulley, and are clamped by the secondary clamping force between the pulley sheaves of the secondary pulley. The clamping forces are in this case oriented substantially axially, but owing to the conical shape of the pulley sheaves, the drive belt is subjected to a normal force on both sides for each pulley and also to a force which is directed substantially radially outwards, the radial force. In this context, the normal forces make it possible to apply a tangentially oriented frictional force, so that the drive belt can be driven by rotation of the pulley in the circumferential direction.

The level of the normal force and therefore that of the clamping force which is required to transmit the mechanical power is determined, inter alia, by the quotient of a torque which is exerted on a pulley and the product of a radial position of the drive belt between the pulley sheaves of said pulley, referred to for short as the primary or secondary running radius, respectively, and a coefficient of friction in the frictional contact between the drive belt and said pulley. If power losses are ignored, this required force level of the clamping force will be equal for both pulleys.

In addition, the radial forces exerted on the drive belt have to be in equilibrium between the two pulleys, in order also to make said running radii, whereof the quotient determines what is known as the geometric transmission ratio of the transmission, constant. This latter condition necessitates a certain required force ratio between the clamping forces, which in most operating conditions of the transmission, which are characterized for example by the torque level or the transmission ratio, generally deviates from 1.

It is known from said document to control the clamping forces on the basis of the difference between a reference or desired value for a relative movement of the drive belt and pulleys with respect to one another, i.e. the slip, and an actual measured value for this parameter, the transmission control attempting to shift this difference towards zero by increasing the clamping forces if the difference is lower than zero, i.e. if the actual value is greater than the desired value, and conversely increasing the clamping forces if the difference is greater than zero.

Dutch patent application NL-1022243 shows a typical traction curve, as it is known, for the drive-belt-and-pulley type transmission, from which it can be seen that at a given constant value of the transmission ratio and the clamping forces, the slip in what is referred to as the micro-slip range increases more or less proportionally to an increasing level in the torque to be transmitted, at least as far as a certain critical maximum level thereof. Above the critical torque level, in what is known as the macro-slip range, the slip is no longer stable and will increase uncontrollably even at a constant torque level, with the result that the transmission and in particular its drive belt component will ultimately be damaged. To prevent this, it is proposed in NL-1022243 to select the desired value for the slip to be in the micro-slip range and preferably as low as possible, and therefore relatively far away from the macro-slip range. This type of desired value for the slip also reduces the risk of damage to the transmission as a result of a possibly unexpected and/or sudden increase in the torque level, on account of the fact that in this case the macro-slip range is not reached, or at least is not reached quickly. It is also noted as an advantage that choosing such a desired value for the slip minimizes the power losses resulting from the evolution of heat in the frictional contact between the pulleys and the drive belt.

The European patent application of later date, bearing application number 03023938.8, however, reports that an optimum desired value for the slip in terms of the overall efficiency of the transmission, in some transmission ratios thereof, will in fact be more towards the macro-slip range, or possibly even at the boundary between the latter and the micro-slip range, on account of the fact that this transmission efficiency is determined not only by rotational speed losses but also in part by torque losses between the two pulleys.

Therefore, the problem arises that, if the desired value for the slip is adapted to approach the optimum transmission efficiency, the actual slip value during operation can at least temporarily be in the macro-slip range, for example as a result of the unexpected and/or sudden increase in the torque level, but also, for example, during a change in the transmission ratio, i.e. shifting, of the transmission, which, after all, involves change in the force ratio between the separate clamping forces, for example by lowering one of the two clamping forces. As has already been noted, the slip is unstable in the macro-slip range and can easily increase to a high level at which the transmission can be permanently damaged.

It is an object of the present invention to provide a control method for a continuously variable transmission which effectively avoids an excessively high slip value. According to the invention, a control method of this type is obtained by the combination of measures described in claim 1.

A control method of this type has the advantage that the actual slip value, at the start of a change in the transmission ratio of the transmission, always at least has the tendency to decrease, on account of the fact that this change is initiated by an increase in one of the two clamping forces in the transmission. After all, the slip decreases as a result of an increase in the clamping force, with the result that the risk of the slip being in the macro-slip range or at least adopting an unacceptably high value is effectively and considerably reduced.

It should be noted that in general as an alternative to using the ratio between the clamping forces, it is also possible to work on the basis of a difference required between them, since this difference can easily be converted by calculation into the ratio between the clamping forces and vice versa with the aid of said required force level.

Claim 2 describes the control method according to the invention in a more detailed embodiment. The control method as claimed in claim 2 is based on two control processes, namely control of the slip and control of the transmission ratio, with the primary clamping force and the secondary clamping force being given by combining the outcome of the two control processes, namely respectively said required force level and said required force ratio between the primary and secondary clamping forces, specifically in such a manner that the lower of the two clamping forces is equal to said required clamping force and the respective other clamping force is equal to the product of said required force level and this required force ratio or, if this force ratio is lower than 1, the inverse thereof.

The effect of the latter control method corresponds to that of the control method as claimed in claim 1. In addition, however, this control method also permits said two control processes to be carried out separately, i,e. independently of one another, so that the latter can be of relatively simple structure. It is also advantageous if said two control processes comprise, in a generally known way, a feedback of, respectively, the actual slip value in the slip control and the actual value of the transmission ratio in the control of the transmission ratio.

In each of the control methods described above, it may be advantageous for the desired value for the slip and/or the transmission ratio to be matched to the instantaneous operating conditions of the transmission, such as this slip and transmission ratio, but also the torque to be transmitted, the rotational speed, the level of the clamping forces, etc.

For complete control of the transmission used in a motor vehicle, it is possible, in addition to the two control processes described, for the rotational speed of the primary pulley to be set to a value intended for it in an additional, independent third control process using, as control parameter, an engine torque output to the transmission by an engine. According to the invention, for this purpose it is possible to generate a desired value for the rotational speed of the primary pulley and to compare this desired value with the value which actually occurs for this rotational speed. Then, in the event of a positive difference between these values, the engine torque is increased, and in the event of a negative difference between these values the engine torque is reduced, for example by corresponding intervention in a fuel supply to the engine. This results in relatively simple and robust control of both the engine and the transmission, with minimal interference between the various control processes, namely the slip control, the control of the transmission ratio of the transmission and the control of the rotational speed of the primary pulley.

The invention will now be explained in more detail, by way of example, with reference to the drawing, in which:

Figure 1    diagrammatically depicts part of a continuously variable transmission with drive belt and pulleys,

Figure 2    shows an example of a so-called traction curve for the transmission shown in Figure 1,

Figure 3    shows an example of an equilibrium ratio Kp/Ks for clamping forces in relation to a geometric transmission ratio Rg for the transmission shown in Figure 1.

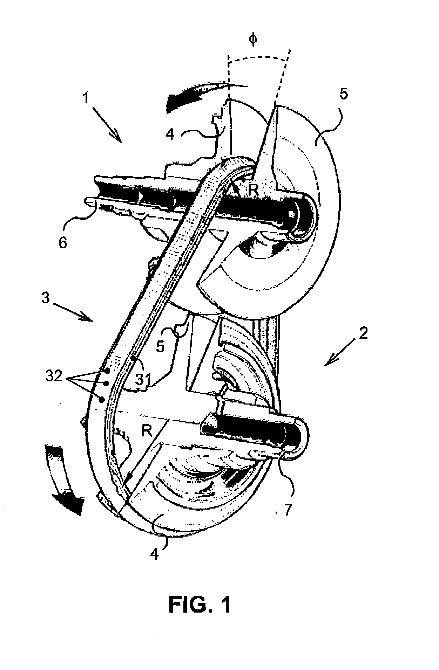

Figure 1 shows the main parts of a continuously variable transmission as used in the drive of, for example, passenger cars. The transmission is generally known per se and comprises a primary pulley 1 and a secondary pulley 2, which each comprise two pulley sheaves 4, 5, and a drive belt 3 positioned between them. The pulley sheaves 4, 5 are conical in form, and at least one sheave 4 of a pulley 1, 2 can be displaced in the axial direction along a respective shaft 6, 7 on which the sheaves 4, 5 are arranged. Furthermore, the transmission includes activation means (not show in the figure), which are generally electronically controllable and hydraulically acting and are able to apply an axial force Fax to said one sheave 4, in such a manner that the drive belt 3 is clamped between the respective sheaves 4, 5 and a mechanical power can be transmitted between the pulleys 1, 2 by means of friction in the conical contact surface between the sheaves 4, 5 and the drive belt 3.

The drive belt 3 shown in Figure 1 comprises a pair of endless metal carrier elements 31, each comprising a set of nested thin metal rings, which form a carrier for a series of metal transverse elements 32 which absorb the clamping forces exerted between the sheaves 4, 5 of a pulley 1, 2 and which, through rotation of a driving pulley 1 are moved over the carrier elements 31, advancing one another, towards a driven pulley 2. A drive belt of this type is also known as the Van Doorne push belt and is described in more detail, for example, in European patent EP-A-0 626 526.

The torque T which can be transmitted by the transmission is determined, in accordance with equation (1) below, by the axial clamping force Fax exerted, a contact angle of the contact surface with respect to the radial direction, i.e. half an angle $\phi$ defined between the tapering pulley sheaves, a running radius R of the drive belt 3 and a coefficient of friction $\mu[v]$:

$$T = (2 \bullet Fax \bullet R \bullet \mu[v]) / (\cos(\tfrac{1}{2}\phi)) \qquad (1)$$

In practice, it has been found that the coefficient of friction $\mu[v]$ is not constant, but rather varies in connection with the slip v between the drive belt 3 and the pulleys 1, 2, which here is defined, incidentally, as:

$$v = (Rs/Rg) - 1 \qquad (2)$$

In the above, Rg denotes the geometric transmission ratio of the transmission, which is defined as the primary running radius R of the drive belt 3 divided by the secondary running radius R thereof, and Rs denotes a rotational speed ratio, which is defined as a rotational speed of the secondary pulley 2 divided by that of the primary pulley 1. Incidentally, the geometric transmission ratio Rg can be established by measuring the position of the displaceable pulley sheave 4 of a pulley 1 or 2. It is also possible to establish the slip v by measuring the longitudinal speed of the drive belt and comparing it with the rotational speeds of the pulleys 1 and 2.

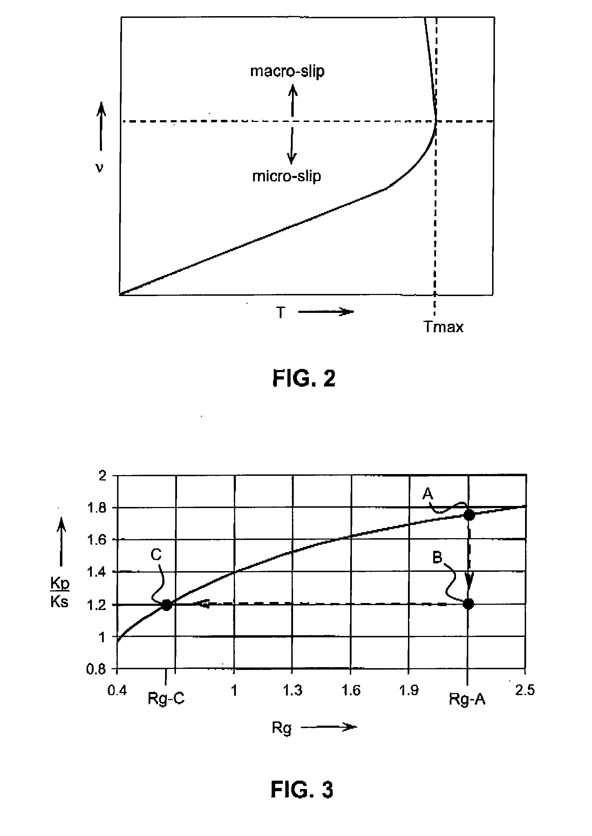

The relationship between the torque T to be transmitted and the slip v, and therefore the numerical value of the coefficient of friction $\mu[v]$, at constant axial clamping forces Fax and running radii R, is given by what is known as the traction curve of the transmission, or more generally the frictional transmission. An example of a traction curve of this type is shown in Figure 2, in which it is possible to roughly distinguish between two partial ranges.

In the micro-slip range, the slip v increases more or less proportionally with the torque T to be transmitted, until a critical or maximum value $T_{MAX}$ for this torque is reached. In this range, therefore, the coefficient of friction $\mu[v]$ increases as the slip value v rises, and therefore also as a torque T to be transmitted rises. If it is then attempted to raise the torque T to be transmitted to beyond the maximum value $T_{MAX}$ for this torque, the slip v increases uncontrollably. Conversely, if the slip v itself is controlled directly, the torque T which can be transmitted appears to be independent of the value of the slip v, or even appears to decrease slightly as the slip value v increases. In this macro-slip range, as it is known, the coefficient of friction $\mu[v]$ from equation (1) therefore approximately has a constant value.

It follows from the above that the transmission will exhibit a stable behavior in the micro-slip range, in which the coefficient of friction $\mu[v]$ will increase in the event of an unexpected and/or sudden increase in the torque T to be transmitted, so that the transmission will in fact be able to transmit a higher torque T even with a constant axial clamping force Fax. However, its behavior will be unstable in the macro-slip range, with the result that the slip v can increase quickly and uncontrollably as a result of a very slight fluctuation in the torque T to be transmitted. Partly for this reason, in the known transmission the axial clamping forces Fax are controlled to such a high level in relation to the torque T to be transmitted that the slip value v and/or a reference or desired value $v_{REF}$ is as a result in principle always in the micro-slip range, i.e. even during an unexpected and/or sudden increase in the torque T.

The geometric transmission ratio Rg of the transmission is determined by an equilibrium ratio between the axial clamping force Kp exerted by the primary pulley 1 on the drive belt 3 and the axial clamping force Ks exerted by the secondary pulley 2 on the drive belt 3. An example of this equilibrium ratio Kp/Ks in relation to the geometric transmission ratio Rg is plotted in Figure 3. In reality, a large number of parameters (i.e. operating conditions) influence the exact value of the equilibrium ratio Kp/Ks. A change in the transmission ratio, i.e. a shift in the transmission, is realized by making the ratio between the clamping forces Kp, Ks deviate from the equilibrium ratio Kp/Ks. By lowering the primary clamping force Kp from the equilibrium ratio "A" with the transmission ratio Rg-A, for example, in Figure 3, so that the non-equilibrium ratio "B" is reached, the transmission will start to shift towards the transmission ratio Rg-C with an equilibrium ratio "C" which corresponds to the non-equilibrium ratio "B".

The present invention now proposes that a desired change in the equilibrium ratio Kp/Ks, for example for shifting of the transmission, always be initiated by increasing one of the two clamping forces Kp or Ks. Therefore, in the example illustrated, in accordance with the invention the equilibrium ratio "A" is changed in the direction of the non-equilibrium ratio "B" not by lowering the primary clamping force Kp, but rather by increasing the secondary clamping force. A control method of this type has the advantage that the actual slip value at the start of a change in the transmission ratio of the transmission always at least has the tendency to decrease, on account of the fact that this change is initiated by an increase in one of the two clamping forces in the transmission. After all, an increase in the clamping force causes the slip to decrease, so that the risk of the slip moving into the macro-slip range, or at least adopting an unacceptably high value, is effectively and considerably reduced.

## Claims

1. A control method for controlling a continuously variable transmission for transmitting a mechanical power between a primary pulley (1) and a secondary pulley (2) of the transmission by means of a drive belt (3) arranged between the pulleys, which pulleys (1, 2) are each provided with two pulley sheaves (4, 5), which together define a tapering groove within which the drive belt (3) is clamped at a radial position, i.e. running radius (R), with the aid of a substantially axially oriented clamping force (Fax) in order for a torque (T) supplied to the transmission to be transmitted between the pulleys (1, 2) with the aid of friction between the sheaves (4, 5) and the drive belt (3), a transmission ratio (Rg) of the transmission being given by the quotient of the running radius (R) of the drive belt (3) at the location of the primary pulley (1) and at the location of the secondary pulley (2), and a force ratio being given by the quotient of the clamping force (Fax) at the location of the primary pulley (1) and at the location of the secondary pulley (2), **characterized in that** a change in said force ratio for the purpose of effecting a desired change in the transmission ratio (Rg), at least initially, is always realized by a suitably adapted increase in a respective clamping force (Fax).

2. The control method according to claim 1, wherein:

   - a slip value (v) is determined, this value being characteristic of the degree of relative movement between the pulleys (1, 2) and the drive belt (3),
   - a difference between this slip value (v) and a reference value (□REF) for it is determined,
   - a required force level is determined at least partly on the basis of this difference,
   - a required force ratio or force difference between the clamping force (Fax) of the primary pulley (1) and the clamping force (Fax) of the secondary pulley (2) is determined at least partly on the basis of a transmission ratio (Rg) of the transmission and/or a change in this transmission ratio,
   - said clamping forces (Fax) are controlled to a level respectively intended for them,

   **characterized in that**

   - if said required force ratio is greater than or equal to 1, the force level intended for the clamping force (Fax) of the primary pulley (1) is given by the product of said required force level and said required force ratio, or
   - if said required force ratio is less than 1, the force level intended for the clamping force (Fax) of the secondary pulley (2) is given by the product of said required force level and the inverse of the required force ratio, and **in that**
   - the force level which is intended for the respective other one of the primary clamping force (Fax) and the secondary clamping force (Fax) is given by said required force level.

3. A continuously variable transmission for transmitting a mechanical power between a primary pulley (1) and a secondary pulley (2) of the transmission by means of a drive belt (3) arranged between the pulleys, which pulleys (1, 2) are each provided with two pulley sheaves (4, 5), which together define a tapering groove within which the drive belt (3) is clamped at a radial position, i.e. running radius (R), with the aid of a substantially axially oriented clamping force (Fax) in order for a torque (T) supplied to the transmission to be transmitted between the pulleys (1, 2) with the aid of friction between the sheaves (4, 5) and the drive belt (3), a transmission ratio (Rg) of the transmission being given by the quotient of the running radius (R) of the drive belt (3) at the location of the primary pulley (1) and at the location of the secondary pulley (2), and a force ratio being given by the quotient of the clamping force (Fax) at the location of the primary pulley (1) and at the location of the secondary pulley (2), **characterized in that** it is controlled using one of the control methods as claimed in claim 1 or 2.

## Patentansprüche

1. Steuerverfahren zum Steuern eines stufenlosen Getriebes zur Übertragung einer mechanischen Kraft zwischen einer Primärrolle (1) und einer Sekundärrolle (2) des Getriebes mittels eines zwischen den Rollen angeordneten Antriebsriemens (3), wobei die Rollen (1, 2) jeweils mit zwei Rollenscheiben (4, 5) versehen sind, welche zusammen eine sich verjüngende Nut definieren, in der mit Hilfe einer im Wesentlichen axial ausgerichteten Klemmkraft (Fax) der Antriebsriemen (3) in einer radialen Position, das heißt am Rollradius (R), festgeklemmt ist, damit ein dem Getriebe zugeführtes Drehmoment (T) mit Hilfe von Reibung zwischen den Rollenscheiben (4, 5) und dem Antriebsriemen (3) zwischen den Rollen (1, 2) übertragen wird, wobei ein Übersetzungsverhältnis (Rg) des Getriebes durch den Quotienten des Rollradius (R) des Antriebsriemens (3) an der Stelle der Primärrolle (1) und an der Stelle der Sekundärrolle (2) gegeben wird und ein Kraftverhältnis durch den Quotienten der Klemmkraft (Fax) an der Stelle der Primärrolle (1) und an der Stelle der Sekundärrolle (2) gegeben wird, **dadurch gekennzeichnet, dass** eine Änderung des Kraftverhältnisses zwecks Bewirkung einer gewünschten Änderung des Übersetzungsverhältnisses (Rg), zumindest anfangs, immer durch eine geeignet angepasste Verstärkung einer jeweiligen Klemmkraft (Fax) realisiert wird.

**2.** Steuerverfahren nach Anspruch 1, wobei:

- ein Schlupfwert (v) bestimmt wird, wobei dieser Wert für den Grad der relativen Bewegung zwischen den Rollen (1, 2) und dem Antriebsriemen (3) charakteristisch ist,
- eine Differenz zwischen dem Schlupfwert (v) und einem Bezugswert ($V_{REF}$) dafür bestimmt wird,
- eine erforderliche Krafthöhe zumindest teilweise auf Grundlage dieser Differenz bestimmt wird,
- ein erforderliches Kraftverhältnis oder eine erforderliche Kraftdifferenz zwischen der Klemmkraft (Fax) der Primärrolle (1) und der Klemmkraft (Fax) der Sekundärolle (2) zumindest teilweise auf Grundlage eines Übersetzungsverhältnisses (Rg) des Getriebes und/oder einer Änderung dieses Übersetzungsverhältnisses bestimmt wird,
- die Klemmkräfte (Fax) auf eine Höhe gesteuert werden, die jeweils für sie gedacht ist,

**dadurch gekennzeichnet, dass**

- wenn das erforderliche Kraftverhältnis größer gleich 1 ist, die für die Klemmkraft (Fax) der Primärrolle (1) bestimmte Krafthöhe durch das Produkt der erforderlichen Krafthöhe und des erforderlichen Kraftverhältnisses bestimmt wird, oder
- wenn das erforderliche Kraftverhältnis kleiner als 1 ist, die für die Klemmkraft (Fax) der Sekundärrolle (2) bestimmte Krafthöhe durch das Produkt der erforderlichen Krafthöhe und des Kehrwerts des erforderlichen Kraftverhältnisses bestimmt wird, und dass
- die Krafthöhe, die für die jeweils andere Kraft, die Primärklemmkraft (Fax) oder die Sekundärklemmkraft (Fax) bestimmt ist, durch die erforderliche Krafthöhe gegeben wird.

**3.** Stufenloses Getriebe zur Übertragung einer mechanischen Kraft zwischen einer Primärrolle (1) und einer Sekundärrolle (2) des Getriebes mittels eines zwischen den Rollen (1, 2) angeordneten Antriebsriemens (3), wobei die Rollen jeweils mit zwei Rollenscheiben (4, 5) versehen sind, welche zusammen eine sich verjüngende Nut definieren, in der der Antriebsriemen (3) mit Hilfe einer im Wesentlichen axial ausgerichteten Klemmkraft (Fax) in einer radialen Position, das heißt am Rollradius (R), festgeklemmt ist, damit ein dem Getriebe zugeführtes Drehmoment (T) mit Hilfe von Reibung zwischen den Rollenscheiben (4, 5) und dem Antriebsriemen (3) zwischen den Rollen (1, 2) übertragen wird, wobei ein Übersetzungsverhältnis (Rg) des Getriebes durch den Quotienten des Rollradius (R) des Antriebsriemens (3) an der Stelle der Primärrolle (1) und an der Stelle der Sekundärrolle (2) gegeben wird und ein Kraftverhältnis durch den Quotienten der Klemmkraft (Fax) an der Stelle der Primärrolle (1) und an der Stelle der Sekundärrolle (2) gegeben wird, **dadurch gekennzeichnet, dass** es unter Verwendung eines der Steuerverfahren nach Anspruch 1 oder 2 gesteuert wird.

**Revendications**

**1.** Procédé de commande pour commander une transmission à rapport infiniment variable afin de transmettre une force mécanique entre une poulie primaire (1) et une poulie secondaire (2) de la transmission par le biais d'une courroie de transmission (3) montée entre les poulies, lesquelles poulies (1, 2), sont chacune pourvues de deux flasques de poulie (4, 5), qui définissent entre eux une gorge conique dans laquelle la courroie de transmission (3) est serrée à une position radiale, c.-à-d. à un rayon de fonctionnement (R), par le biais d'une force de serrage (Fax) orientée dans un sens sensiblement axial pour qu'un couple (T) fourni à la transmission soit transmis entre les poulies (1, 2) par le biais de la friction produite entre les flasques (4, 5) et la courroie de transmission (3), un rapport de transmission (Rg) de la transmission étant donné par le quotient du rayon de fonctionnement (R) de la courroie de transmission (3) à l'emplacement de la poulie primaire (1) et à l'emplacement de la poulie secondaire (2), et un rapport de force étant donné par le quotient de la force de serrage (Fax) à l'emplacement de la poulie primaire (1) et à l'emplacement de la poulie secondaire (2), **caractérisé en ce qu'**un changement dudit rapport de force dans le but de produire un changement souhaité du rapport de transmission (Rg) est, du moins initialement, toujours réalisé par une augmentation selon les besoins d'une force de serrage (Fax) respective.

2. Procédé selon la revendication 1, dans ledit Procédé :

- une valeur de glissement (v) est déterminée, cette valeur étant caractéristique du degré de mouvement relatif entre les poulies (1, 2) et la courroie de transmission (3),
- une différence entre cette valeur de glissement (v) et une valeur de référence (DREF) est déterminée,
- un niveau de force requis est déterminé, du moins en partie, sur la base de cette différence,
- un rapport de force ou une différence de force requis(e) entre la force de serrage (Fax) de la poulie primaire (1) et la force de serrage (Fax) de la poulie secondaire (2) est déterminé(e), du moins en partie, sur la base du rapport de transmission (Rg) de la transmission et/ou d'un changement de ce rapport de transmission,
- lesdites forces de serrage (Fax) sont commandés à un niveau voulu pour celles-ci respectivement,

**caractérisé en ce que**

- si ledit rapport de force requis est supérieur ou égal à 1, le niveau de force voulu pour la force de serrage (Fax) de la poulie primaire (1) est donné par le produit dudit niveau de force requis et dudit rapport de force requis, ou
- si ledit rapport de force requis est inférieur à 1, le niveau de force voulu pour la force de serrage (Fax) de la poulie secondaire (2) est donné par le produit dudit niveau de force requis et de l'inverse du rapport de force requis, et **en ce que**
- le niveau de force qui est voulu pour l'autre force de serrage (Fax) respective de la poulie primaire et pour la force de serrage (Fax) de la poulie secondaire est donné par ledit niveau de force requis.

3. Transmission à rapport infiniment variable pour transmettre une force mécanique entre une poulie primaire (1) et une poulie secondaire (2) de la transmission par le biais d'une courroie de transmission (3) montée entre les poulies, lesquelles poulies (1, 2), sont pourvues chacune de deux flasques de poulie (4, 5), qui définissent entre eux une gorge conique dans laquelle la courroie de transmission (3) est serrée à une position radiale, c.-à-d. à un rayon de fonctionnement (R), par le biais d'une force de serrage (Fax) orientée dans un sens essentiellement axial pour qu'un couple (T) fourni à la transmission soit transmis entre les poulies (1, 2) par le biais de la friction produite entre les flasques (4, 5) et la courroie de transmission (3), un rapport de transmission (Rg) de la transmission étant donné par le quotient du rayon de rotation (R) de la courroie de transmission (3) à l'emplacement de la poulie primaire (1) et à l'emplacement de la poulie secondaire (2), et un rapport de force étant donné par le quotient de la force de serrage (Fax) à l'emplacement de la poulie primaire (1) et à l'emplacement de la poulie secondaire (2), **caractérisée en ce qu'**elle est commandée en utilisant un des procédés de commande selon la revendication 1 ou 2.

**FIG. 1**

**FIG. 2**

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0705399 A
- EP 1314913 A
- NL 1022243
- EP 03023938 A
- EP 0626526 A